# EUROPÄISCHE PATENTSCHRIFT

(11) **EP 1 980 152 B1**
(45) Veröffentlichungstag und Bekanntmachung des Hinweises auf die Patenterteilung: **28.11.2012**
(21) Anmeldenummer: 08007086.5
(22) Anmeldetag: 10.04.2008
(51) Int. Cl.: A23C 3/037, B01F 5/04, A23L 3/22, A23L 3/18

(54) **Injektor und Verfahren zum Einleiten eines dampfförmigen Wärmeträgers in ein flüssiges Produkt**
Injector and method for introducing a gaseous heat distributor into a liquid product
Injecteur et procédé d'introduction d'un agent caloporteur sous forme de vapeur dans un produit liquide

(30) Priorität: 14.04.2007 DE 102007017704
(43) Veröffentlichungstag der Anmeldung: 15.10.2008
(73) Patentinhaber: GEA TDS GmbH, 31157 Sarstedt (DE)
(72) Erfinder: Kowalik, Gottfried, 48712 Gescher (DE); Tacke, Ludger, 46342 Velen (DE); Schwenzow, Uwe, 48683 Ahaus (DE)

(56) Entgegenhaltungen:
- WO-A-00/45100
- WO-A-02/01970
- WO-A-2004/075670
- DE-A1- 1 617 964
- US-A- 1 803 054
- US-A- 3 988 112
- US-A- 4 689 237

## Beschreibung

### TECHNISCHES GEBIET

Die Erfindung betrifft einen Injektor zum Einleiten eines dampfförmigen Wärmeträgers in ein flüssiges Produkt, insbesondere ein Nahrungsmittel oder Getränk, beispielsweise Milch, und ein mit dem Injektor durchführbares Verfahren, bei dem der dampfförmige Wärmeträger das flüssige Produkt zur Bildung eines keimfreien Produkts erhitzt und bei dem das Strömen des dampfförmigen Wärmeträgers durch Druckabfall hervorgerufen wird, der durch die Geschwindigkeit des flüssigen Produkts entsteht, sowie mit den weiteren Merkmalen des Oberbegriffs des Anspruchs 1 bzw. des abhängigen Anspruchs 12.

### STAND DER TECHNIK

Im Hinblick auf die Wärmebehandlung eines flüssigen Produkts der vorg. Art kann qualitativ einwandfreier Wasserdampf von Trinkwasserqualität, vorzugsweise sog. kulinarischer Wasserdampf im Sättigungszustand, verwendet werden, um das flüssige Produkt schnell und effizient zu erwärmen. Eines der zum direkten Injizieren von Dampf in das flüssige Produkt angewendeten Verfahren besteht in der Verwendung eines Injektors.

In Abhängigkeit von der Temperatur, auf die das flüssige Produkt erwärmt werden soll, ist es möglich, ein pasteurisiertes oder aseptisches Produkt oder als Alternative ein Produkt, das eine verlängerte Haltbarkeit bei Kaltlagerung besitzt, zu erhalten. Das gebräuchlichste Verfahren besteht darin, das flüssige Produkt, bei dem es sich zum Beispiel um Molkereiprodukte, Säfte, viskose Fruchtprodukte oder dergleichen handelt, auf eine Temperatur zu erwärmen, bei der eine völlige Zerstörung vegetativer Mikroorganismen erreicht wird. Dadurch wird ein Lebensmittelprodukt erhalten, das bei Lagerung bei Raumtemperatur stabil bleibt. Es ist keine ununterbrochene Kühlkette über den Zeitraum der Lagerung erforderlich, was insbesondere in Ländern mit nicht hinreichender Kühlketten-Infrastruktur von Vorteil sein kann.

Die Direkterhitzung mit Dampf wird beispielsweise bei der Milcherhitzung angewendet (sog. UHT-Milch oder ESL-Milch). Die Direkterhitzung steht hier in Konkurrenz zu dem vorg. erwähnten indirekten Erhitzungsverfahren mittels beispielsweise Rohrbündel-Wärmeaustauscher. Für die Herstellung der UHT-Milch werden als Erhitzungstemperatur beispielsweise 150°C und als Einwirkungsdauer 2,4 Sekunden angegeben (s. KESSLER, Lebensmittel-Verfahrenstechnik, 1976, Seite 154-155). Die Milch durchläuft einen Vor- und Nachwärmer, wird mit ca. 70 - 80 °C durch eine Pumpe auf den für die UHT-Erhitzung notwendigen Druck (150 °C entsprechend 4,76 bar) gebracht und in der Mischkammer mit Wasserdampf intensiv vermengt. Der Wasserdampf kondensiert sofort in der Milch, indem er seine Verdampfungsenthalpie abgibt und die Milch aufheizt. Die Dampfmenge muss so bemessen sein, dass unmittelbar nach der Durchmischung die Milch und das in ihr enthaltene Kondensat auf Sterilisationstemperatur aufgeheizt sind. Anschließend durchströmt das Gemisch eine Haltestrecke (2 bis 4 Sekunden), die tangential in ein Vakuumgefäß einmündet. Unmittelbar an der Einmündung sitzt ein einstellbares Druckhalteventil, das den der Sterilisationstemperatur entsprechenden Sattdampfdruck im Halterohr aufrechterhält. Danach expandiert das unter Druck stehende heiße Gemisch, wodurch spontan Abkühlung durch Verdampfen eintritt. Dabei ist das Vakuum so bemessen, dass exakt die gleiche Menge verdampft, die als Frischdampf vorher zugeführt wurde. Der Entspannungsdampf wird zur Vorwärmung der ankommenden Milch benutzt, während die Milch eine aseptische Linie - Pumpe, Homogenisator, Kühler und evtl. Lagertank - zur aseptischen Verpackung durchläuft.

Durch Injizieren von Dampf in das flüssige Produkt wird dieses unmittelbar, schnell und effizient erwärmt. Infolge dieses schnellen Verfahrens kann die Behandlungszeit verringert werden, was insgesamt zu einer verringerten Wärmeeinwirkung auf das Produkt führt und wodurch ein Produkt erhalten wird, das vor allem im Hinblick auf den Geschmack ein höheres Qualitätsniveau behält. Die schnelle und schonende Wärmebehandlung beim direkten Erwärmungsverfahren wird um den Preis eines höheren Energieaufwandes gegenüber dem indirekten Erwärmungsverfahren erkauft. Daher ist man bestrebt, die Wärmeübergangsbedingungen beim direkten Verfahren der in Rede stehenden Art weiter zu verbessern, was dann zwangsläufig zu einer geringeren erforderlichen Temperaturdifferenz zwischen dampfförmigem Wärmeträger und dem zu erwärmende flüssigen Produkt führt und damit die schonende Behandlung des Produkts weiter begünstigt.

Der grundlegende Aufbau eines Injektors der einleitend gekennzeichneten Art ist in der US 1,803,054 A beschrieben. Er dient der Erwärmung von Kesselspeisewasser mittels Wasserdampf in Dampfkraftanlagen, und er besitzt daher keine spezielle Eignung zur Erzeugung und Behandlung keimfreier flüssiger Produkte im Bereich der Nahrungsmittel- und Getränkeindustrie. Die Beimischung des Wasserdampfes in das Kesselspeisewasser erfolgt beispielsweise in drei aufeinander folgenden Stufen, wobei in jeder Stufe mehrere Ringdüsen, in Strömungsrichtung des Kesselspeisewassers gesehen, im Abstand hintereinander angeordnet sind, die einen ringförmigen Strom des Kesselspeisewassers umschließen und jeweils vom Wasserdampf aus einem zugeordneten Beaufschlagungsraum versorgt werden. Der Wasserdampf dringt radial außenseits in den Strom des Kesselspeisewassers ein, und er hat eine axiale Strömungskomponente, die in Strömungsrichtung des Kesselspeisewassers orientiert ist. Der ringförmige Strom des Kesselspeisewassers wird radial innenseits von einem in axialer Richtung verstellbaren, beispielsweise durch alle Stufen hindurchgreifenden Verdrängerkörper begrenzt, wobei sich der Durchtrittsquerschnitt zwischen Verdrängerkörper und den diesen umschließenden Ringdüsen, in Strömungsrichtung des Kesselspeisewassers gesehen und in jeder der Stufen, kontinuierlich vergrößert.

In der WO 02101970 A ist ein Dampfinjektor beschrieben, mit dem Dampf in ein fließendes flüssiges Lebensmittel zu dessen Erwärmung eingeleitet wird. Der Dampfinjektor besteht aus einem ringförmigen, in Längsrichtung durchströmten Kanal mit einem Einlass zur Einleitung und einem Auslass zur Abfuhr des flüssigen Lebensmittels. Zwischen dem Ein- und Auslass ist ein sich konisch erweiternder und anschließend konisch verjüngender Strömungsverteiler angeordnet, der koaxial im Kanal angeordnet und in dessen Längsrichtung verschieblich ist. Der Strömungsverteiler wird von dem flüssigen Lebensmittel umströmt und fächert letzteres am Ende des ringförmigen Kanals radial nach außen auf. Durch die Verschieblichkeit des Strömungsverteilers in Längsrichtung des Kanals lässt sich sowohl der Durchfluss im Kanal als auch die Strömungsgeschwindigkeit in einem zwischen dem Strömungsverteiler und einer endseitigen Begrenzungswand des Kanals gebildeten Ringspalt verändern. Der Kanal ist außenseits von einer ringförmigen Kammer umgeben, die über einen Einlass mit Dampf beaufschlagt wird. Die ringförmige Kammer verjüngt sich austrittsseitig düsenförmig und der dort austretende ringförmige Dampfstrahl trifft radial außenseits auf die vom Strömungsverteiler radial aufgefächerte ringförmige Strömung des flüssigen Lebensmittels, und Dampf und flüssiges Lebensmittel vermischen sich stromabwärts miteinander.

Aus der DE 16 17 964 A1 ist eine Wasserdampfeinblasvorrichtung für eine Milchsterilisationsanlage bekannt, die einen ringförmigen Milchkanal, einen inneren Dampfkanal und einen äußeren konzentrischen Dampfkanal aufweist. Der innere Dampfkanal mündet über eine verstellbare innere Dampfeinblasöffnung, welche durch ein lippenförmiges Ende des inneren Dampfkanals und durch einen beweglichen konischen Einsatzkörper begrenzt wird, in den ringförmigen Milchkanal ein. Der äußere Dampfkanal mündet über eine verstellbare äußere Dampfeinblasöffnung, welche durch ein lippenförmiges Ende der Innenwand des äußeren Dampfkanals und durch eine verstellbare konische Innenschulter an der Außenwand des äußeren Dampfkanals begrenzt wird, gleichfalls in den ringförmigen Milchkanal ein. Der bewegliche konische Einsatz besitzt eine Gewindeverlängerung, um die Einstellung des Spiels der inneren Öffnung zu ermöglichen und die konische Innenschulter ist in der Längsrichtung mit Bezug auf die Lippe des äußeren Dampfkanals mit Hilfe von Beilegescheiben verstellbar. Der fließende Milchring trifft mit dem Dampf aus dem inneren und dem äußeren Einblasring gleichzeitig zusammen. Der Dampf aus dem inneren und dem äußeren Einblasring ummantelt kurzzeitig den Ring aus sich bewegender Milch und vermischt sich dann mit dieser, um deren Wärme auf die richtige Temperatur zu bringen. Die Milch und der Dampf bewegen sich anschließend gemeinsam längs eines Kanals, der durch ein Gehäuse und einen kegeligen Einsatzkörper begrenzt wird. Die nun heiße Milch und der Dampf bewegen sich durch eine Gehäuseverlängerung der Einblasvorrichtung in ein Halterohr, in dem die Milch für eine vorbestimmte Zeit auf der hohen Temperatur gehalten wird.

Die WO 00145100 A beschreibt ein Verfahren zur Regelung eines Dampfinjektors von der Art, die einen Einlass für Dampf und einen Einlass für das Produkt, insbesondere ein Lebensmittel wie Milch oder Saft, das wärmebehandelt werden soll, sowie einen Auslass für das fertig behandelte Produkt aufweist. Der Dampfinjektor weist ferner konzentrisch angeordnete Spalte für den Dampf und das Produkt auf, und die Spalte können insofern geregelt werden, als eine mittig im Dampf- und Produktstrom angeordnete Regelspindel wechselseitig aus- oder eingezogen wird. Die Regelspindel wird dabei mittels einer Schaltvorrichtung geregelt, wobei letztere durch den Druckunterschied zwischen einem Druck, der im Produkteinlass gemessen wird, und einem Druck, der im Produktauslass gemessen wird, gesteuert wird.

Aus der US 4,725,203 A ist ein Injektor bekannt, bei dem eine einen zentralen, axial verstellbaren Verdrängerkörper ringförmig umströmende flüssige Phase eines Stoffes von radial außenseits über eine die flüssige Phase umschließende einzige Ringdüse mittels einer gasförmigen Phase eines anderen Stoffes beaufschlagt wird.

Aus der WO 2004/075670 A1 ist ein Dampfinjektor bekannt, welcher in einem Injektorgehäuse einen Einlass für Dampf, einen Einlass ein für Produkt und einen Auslass für das Produkt aufweist. In diesem Injektor wird das flüssige Produkt, beispielsweise flüssige oder pumpbare Lebensmittel, über eine Ringdüse einem Mischraum in Form eines gebündelten Freistrahles mit Kernströmung zugeführt. Der Dampf als Wärmeträger wird gleichfalls über eine Ringdüse, die die Ringdüse für das Produkt konzentrisch umschließt, in Form eines ringförmigen Freistrahles in den Mischraum ausgebracht und dem Produktstrahl von außen zugeführt. In dem Mischraum werden der Dampf und das Produkt miteinander vermischt. Das Gemisch verlässt den Mischraum und passiert dabei eine Drosselscheibe, die unmittelbar hinter dem Auslass des Mischraumes angeordnet ist.

In der EP 1 353 745 B1 ist ein verstellbarer Dampfinjektor beschrieben, der in einem Injektorgehäuse einen Einlass für ein Produkt, einen Auslass für das Produkt und einen Dampfeinlass aufweist. Der Injektor enthält weiterhin ein dickwandiges Rohr, das in dem Injektorgehäuse angeordnet ist und eine Vielzahl von durchgehenden Löchern aufweist, die im Wesentlichen radiale Kanäle bilden. In dem dickwandigen Rohr ist ein Produktrohr angeordnet, das in Längsrichtung des Rohrs stufenlos verschiebbar ist. Der Injektor ist vorzugsweise geeignet für die Wärmebehandlung einer Flüssigkeit oder von pumpbaren Lebensmitteln hoher Viskosität. Die Wirkung dieses bekannten Dampfinjektors beruht darauf, dass dem Produkt in der Ausformung einer Rohrströmung über eine Vielzahl von Dampfeintrittsöffnungen gleichzeitig, radial von außen, über den gesamten Umfang und über eine von dem axial verschieblichen Produktrohr bestimmte jeweilige Länge des perforierten dickwandigen Rohres Dampf zugeführt wird.

Aus der EP 0584 162 B1 ist ein Apparat zum aseptischen Herstellen von Getränken bekannt, wobei es sich speziell um die Rückverdünnung von Getränken handelt und der Apparat eine sich in axialer Richtung verjüngende ringförmige Mischkammer mit veränderlichem Volumen aufweist. Die Mischkammer wird von einem wärmeabgebenden Wasserstrom durchsetzt, dem im Bereich des Eintritts der Mischkammer eine zweite Flüssigkeit, beispielsweise Getränkesirup, zugemischt wird. Die Zumischung erfolgt über den Umfang der ringförmigen Mischkammer, und zwar radial von außen.

Die DE 195 02 539 C2 beschreibt einen Injektor zum Einleiten eines dampfförmigen Wärmeträgers in eine zu erwärmende Flüssigkeit. Bei der Flüssigkeit handelt es sich um Wasser, das bei der Heißwasserbereitung oder bei der Erzeugung von Warmwasser zu Heizzwecken mittels Dampf erwärmt wird. Der Injektor weist eine Mischkammer mit einer Ausströmöffnung auf. Der dampfförmige Wärmeträger beaufschlagt eine Ringdüse, die über eine ringspaltförmige Austrittsöffnung in die Mischkammer in deren Längsrichtung einmündet. Die Mischkammer weist dabei wenigstens einen ringförmig ausgebildeten, radial durch eine Innenwandung und eine Außenwandung begrenzten Abschnitt auf. Die zu erwärmende Flüssigkeit beaufschlagt eine ringförmige Einströmöffnung, die vorzugsweise als ringförmige, koaxial zu der Ringdüse angeordnete Öffnung mit radialer Öffnungsrichtung ausgebildet ist, die von außen in die Mischkammer einmündet und in Bezug auf die von der Ringdüse definierte Durchströmungsrichtung nach der Austrittsöffnung der Ringdüse angeordnet ist. Durch die Ringdüse wird der dampfförmige Wärmeträger axial in die Mischkammer eingelassen, wobei er im Bereich vor der Austrittsöffnung einen Sog (Druckabfall) erzeugt, der die zu erwärmende Flüssigkeit aus der Einströmöffnung ansaugt. In der Mischkammer vermischt sich der dampfförmige Wärmeträger intensiv mit der zu erwärmenden Flüssigkeit.

Besonders gute Ergebnisse werden mit dem bekannten Injektor erzielt, wenn zwischen der von der Ringdüse definierten Dampfströmungsrichtung und der von der Einströmöffnung definierten Einströmrichtung ein im Wesentlichen rechter Winkel eingeschlossen wird. Dies ist der Fall, wenn die Ringdüse eine im Wesentlichen axiale Öffnungsrichtung und die Einströmöffnung eine im Wesentlichen radiale Öffnungsrichtung aufweisen.

Aus der EP 0 822 338 B1 sind Dampfinjektoren bekannt, die der Erwärmung von Wasser dienen, das insbesondere in einem Wasserzufuhrsystem in einem Notfall-Kernkühlsystem, wie z.B. in einem Leichtwasserreaktor, verwendet wird. Die Dampfinjektoren entsprechen in Bezug auf die Ausführungsformen gemäß den Figuren 1 bis 4 hinsichtlich Aufbau und Funktion im Wesentlichen dem Dampfinjektor gemäß DE 195 02 539 C2**,** d.h. der dampfförmige Wärmeträger fungiert als axial orientierter Treibstrahl und saugt die zu erwärmende radial Flüssigkeit an.

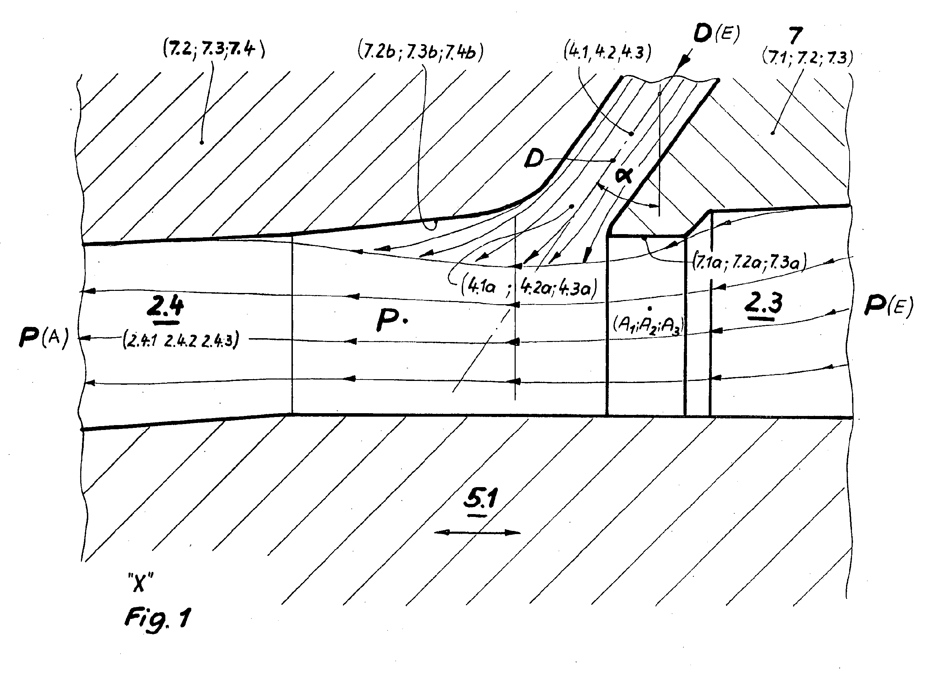

Die Mischkammer ist offensichtlich allenfalls in ihrem Eintrittsbereich ringförmig ausgebildet (Figur 1). Der Dampfinjektor in seiner Ausführungsform gemäß Figur 5 entspricht in Aufbau und Funktion dem Dampfinjektor gemäß der eingangs erwähnten WO 2004/075670 A1.

Es ist Aufgabe der vorliegenden Erfindung, einen Injektor und ein mit diesem durchführbares Verfahren der gattungsgemäßen Art zu schaffen, mit denen die Erhitzung auf die erforderliche Temperatur einerseits effizient, andererseits aber schonend, d.h. mit geringstmöglicher Temperaturdifferenz zwischen dem dampfförmigen Wärmeträger und dem zu erhitzenden flüssigen Produkt erfolgt.

### ZUSAMMENFASSUNG DER ERFINDUNG

Diese Aufgabe wird durch einen Injektor mit den Merkmalen des Anspruchs 1 gelöst. Vorteilhafte Ausgestaltungen des Injektors sind Gegenstand der Unteransprüche. Ein mit dem erfindungsgemäßen Injektor durchführbares Verfahren ist durch die Merkmale des abhängigen Anspruchs 12 gekennzeichnet.

Der erfinderische Lösungsgedanke basiert auf einem dem Anmeldungsgegenstand nächstkommender Stand der Technik, wie er beispielsweise aus der US 1,803,054 A bekannt ist. Bei diesem bekannten Injektor bildet das flüssige Produkt den Treibstrahl aus, und es ist ein ringförmiger Mischraum mit einstellbarem Volumen vorgesehen, dem der anzusaugende dampfförmige Wärmeträger über Ringdüsen zugeführt wird, die jeweils über eine ringspaltförmige Austrittsöffnung radial von außen in den Mischraum einmünden. Die Funktion des Treibstrahls erhält das flüssige Produkt dadurch, dass in ihm ein Druckabfall durch lokale Geschwindigkeitserhöhung erzeugt wird, wobei im Bereich dieses Druckabfalls die Einleitungsstelle für den dampfförmigen Wärmeträger vorgesehen ist.

Während bei anderen bekannten Injektoren der weiter oben beschriebenen Art der dampfförmige Wärmeträger als zentraler ringförmiger Treibstrahl ausgebildet ist und mit hoher kinetischer Energie das zu erwärmende Wasser ansaugt und sich mit diesem in dem anschließenden ringförmigen Mischraum vermischt, saugt beim erfindungsgemäßen Injektor das zu erwärmende flüssige Produkt als zentraler ringförmiger Treibstrahl mit wesentlich moderaterer Geschwindigkeit und entsprechend geringerer kinetischer Energie den dampfförmigen Wärmeträger an, um sich mit diesem dann in dem sich anschließenden ringförmigen Mischraum zu vermischen. Diese Konstellation bewirkt eine deutlich schonendere Behandlung der flüssigen Phase, des Produkts, wie es von der der Erfindung zugrunde liegenden Aufgabe gefordert wird.

Die Leistungsfähigkeit des Injektors gemäß der Erfindung (beispielsweise höherer Durchsatz bei kürzerer Verweilzeit) lässt sich bekanntlich gegenüber einer Anordnung mit einer einzigen Ringdüse dadurch steigern, dass mehr als eine Ringdüse vorgesehen ist, die, in Strömungsrichtung des flüssigen Produkts gesehen, im Abstand hintereinander angeordnet, jeweils vom dampfförmigen Wärmeträger beaufschlagbar, im oder am inneren Gehäuse ausgebildet und mit dem zweiten Beaufschlagungsraum verbunden sind und die jeweils über eine ringspaltförmige Austrittsöffnung von der Seite des umschließenden inneren Gehäuses unter einem Neigungswinkel gleichsinnig zur Strömungsrichtung des flüssigen Produkts in den Mischraum einmünden. Durch dieses parallele Einleiten des dampfförmigen Wärmeträgers an mehr als einer Stelle im Verlauf des Strömungsweges des zu einer Ringspaltströmung geringer radialer Erstreckung ausgeprägten flüssigen Produkts wird die Aufnahmefähigkeit der flüssigen Phase für die dampfförmige Phase im Sinne der Aufgabenstellung, nämlich eine effiziente und gleichsam schonende Erwärmung durchzuführen, voll ausgeschöpft, ohne dass es hierzu einer energetischen Intensivierung des Vorganges, in der Regel befördert durch eine größere treibende Temperaturdifferenz zwischen dampfförmigem Wärmeträger und zu erwärmendem flüssigem Produkt, bedarf.

Die Effizienz des Erwärmungsvorganges, die sich durch eine geringstmögliche Temperaturdifferenz zwischen dampfförmigem Wärmeträger und zu erwärmendem flüssigem Produkt zeigt, wird dadurch gesteigert, dass in an sich bekannter Weise die ringspaltförmige Austrittsöffnung unter dem Neigungswinkel in den Mischraum einmündet, wobei der Neigungswinkel gegen die Senkrechte auf die Längsachse des Mischraumes gemessen wird und gemäß einer sich als besonders effizient herausgestellten Ausgestaltung für den Neigungswinkel ein Wert im Bereich 30 bis 45 Grad, bevorzugt ein Wert von 35 Grad vorgesehen ist. Damit hat eine Komponente der Geschwindigkeit des Stromes des dampfförmigen Wärmeträgers die gleiche Orientierung wie die Strömungsgeschwindigkeit des flüssigen Produkts, so dass der Produktfluss durch den dampfförmigen Wärmeträger unterstützt wird und die Gefahr der Strömungsblockaden durch Dampfblasen im ringförmigen Mischraum vermindert ist.

Der grundlegende erfinderische Lösungsgedanke beim erfindungsgemäßen Injektor manifestiert sich in einer Verbesserung seiner Treibstrahlausbildung, die darin besteht, dass zur üblichen düsenartigen Verengung des ersten Beaufschlagungsraumes für das flüssige Produkt, und zwar am stromabwärtsseitigen Ende der Düse, zusätzlich Vorkehrungen getroffen werden, die eine planmäßige, definierte und verstärkt ausgeprägte Einschnürung des ringförmigen, durch das flüssige Produkt gebildeten Treibstrahles und einen damit verbundenen zusätzlichen Druckabfall erzeugen. Diese Vorkehrungen bestehen darin, dass am inneren Gehäuse, in Strömungsrichtung des flüssigen Produkts gesehen, unmittelbar vor der jeweiligen ringsspaltförmigen Austrittsöffnung jeweils eine ringförmige Nase ausgebildet ist, die an der jeweiligen Stelle einen Durchtrittsquerschnitt des Mischraumes radial außenseits derart einschnürt, dass dieser Durchtrittsquerschnitt, in Strömungsrichtung des flüssigen Produkts gesehen, gegenüber einem diesem jeweils vorgeordneten Durchtrittsquerschnitt verkleinert ist. Diese Nase wird an ihrer angeströmten Umlaufkante bevorzugt scharfkantig oder mit minimalem Abrundungsradius ausgeführt, und sie ist in Bezug auf die ringsspaltförmige Austrittsöffnung in axialer Strömungsrichtung so positioniert, dass die Stelle der stärksten Einschnürung der Strömung und somit die Stelle des größten Druckabfalls mit der vorgesehenen Einleitungsstelle für den dampfförmigen Wärmeträger zusammenfällt.

Die Kontaktzone des dampfförmigen Wärmeträgers mit dem flüssigen Produkt lässt sich dadurch günstig ausgestalten und optimieren, wie dies ebenfalls vorgeschlagen wird, dass, bezogen auf die Strömungsrichtung des flüssigen Produkts, die stromabwärtsseitige Begrenzungsfläche der jeweiligen ringspaltförmigen Austrittsöffnung in eine umlaufende Anschrägung am inneren Gehäuse übergeht, wobei die jeweilige umlaufende Anschrägung eine größere Neigung gegen die Längsachse des Mischraumes besitzt als die sich an die jeweilige Anschrägung jeweils anschließende Begrenzungsfläche des inneren Gehäuses. Durch diese umlaufende Anschrägung wird der Strom des dampfförmigen Wärmeträgers an seiner Einleitungsstelle in Strömungsrichtung des flüssigen Produkts im Rahmen des strömungsmechanisch Möglichen quasi diffusorartig aufgefächert.

Eine besonders vorteilhafte diesbezügliche Ausführungsform sieht vor, dass der Übergang zwischen der stromabwärtsseitigen Begrenzungsfläche der jeweiligen ringspaltförmigen Austrittsöffnung und der jeweils zugeordneten umlaufenden Anschrägung abgerundet ausgeführt ist, wobei der Abrundungsradius relativ groß bemessen ist.

Die gleichmäßige Verteilung des dampfförmigen Wärmeträgers innerhalb der jeweiligen Ringdüse wird, wie dies eine weitere vorteilhafte Ausführungsform vorsieht, dadurch in besonderer Weise sichergestellt, dass der jeweilige Eintritt der Ringdüse von einem in das innere Gehäuse außenseits radial eingreifenden Verteilerring umschlossen ist, der, über seinen Umfang verteilt, eine Vielzahl von gleichmäßig voneinander beabstandeten Ringbohrungen aufweist, die jeweils die Ringdüse mit dem zweiten Beaufschlagungsraum verbinden.

Die gleichmäßige Verteilung des dampfförmigen Wärmeträgers zu den parallel zu versorgenden Ringdüsen wird, wie dies eine andere Ausführungsform vorsieht, dadurch in besonderer Weise erreicht, dass, in Strömungsrichtung des dampfförmigen Wärmeträgers gesehen und vor dessen Eintritt in den zweiten Beaufschlagungsraum, in einem sich an den zweiten Einlass anschließenden konusförmigen Erweiterungsstutzen ein Leitblech mit einer Vielzahl siebförmig angeordneter Verteilerbohrungen vorgesehen ist, das den Durchtrittsquerschnitt des Erweiterungsstutzens fast vollständig ausfüllt. Dabei hat sich eine Ausgestaltung als besonders vorteilhaft herausgestellt, bei der das Leitblech V-förmig gefaltet ist und die Faltkante in der Ebene des größten Durchmessers des konusförmigen Erweiterungsstutzens verläuft.

Eine weitere vorteilhafte Ausführungsform des Injektors gemäß der Erfindung sieht vor, dass sich der Durchtrittsquerschnitt des ersten Beaufschlagungsraumes in seinem von dem Verdrängerkörper durchdrungenen Erstreckungsbereich, in Strömungsrichtung des flüssigen Produkts gesehen, fortlaufend verjüngt. Diese Verjüngung ermöglicht zum einen die einfache Volumenänderung des ersten Beaufschlagungsraumes insbesondere im Bereich des Mischraumes und damit eine einfache Leistungsanpassung des Injektors an unterschiedliche Produkte und/oder Betriebsbedingungen, zum anderen wird dadurch eine über den Druckverlust im in Frage kommenden Strömungsbereich hinausgehende Druckabsenkung generiert, die die Zufuhr des dampfförmigen Wärmeträgers zu den stromabwärts angeordneten Ringdüsen begünstigt. Dadurch wird auch der Tendenz des sich in diesem Bereich durch zwangsläufige Verringerung der treibenden Temperaturdifferenz generell verschlechternden Wärmeübergangs entgegengewirkt.

Die gegenständliche Ausführung des Injektors, insbesondere im Bereich seines ersten Beaufschlagungsraumes und seiner Ringdüsen für den dampfförmigen Wärmeträger, wird vereinfacht und ermöglicht eine flexible Anpassung an die unterschiedlichsten Prozessbedingungen, wenn gemäß einem weiteren Vorschlag das innere Gehäuse aus separaten Gehäuseringen besteht, die, in Strömungsrichtung des flüssigen Produkts gesehen, aneinandergereiht und über die Verteilerringe im Bereich der jeweiligen Ringdüse axial voneinander beabstandet sind, wobei die jeweilige innere Begrenzungsfläche der Gehäuseringe kegelstumpfförmig ausgebildet ist.

Eine weitere Ausführungsform sieht vor, dass sich der Verdrängerkörper, in Strömungsrichtung des flüssigen Produkts gesehen, hinter der ersten Ringdüse und näherungsweise parallel zur inneren Begrenzungsfläche des inneren Gehäuses verjüngt. Dadurch ist eine Volumenänderung des Mischraumes in einem sehr weiten Bereich möglich, da durch die näherungsweise Parallelität der in Frage kommenden Begrenzungsflächen des Mischraumes am einen Ende des Verstellbereichs Ringspalte mit durchgängig sehr kleiner radialer Erstreckung einstellbar sind.

Die axiale Verschiebung des Verdrängerkörpers wird gemäß einem weiteren Vorschlag manuell oder motorisch vorgenommen. Die manuelle Verschiebung erfolgt beispielsweise über ein arretierbares (beispielsweise konterbares) Spindel-Mutter-System. Eine motorische Verschiebung kann beispielsweise über ein motorisch angetriebenes Spindel-Mutter-System erfolgen, wobei der Verstellantrieb beispielsweise elektrisch, pneumatisch oder hydraulisch betrieben wird.

Das erfindungsgemäße Verfahren zum Einleiten eines dampfförmigen Wärmeträgers in ein flüssiges Produkt basiert auf an sich bekannten Verfahrensschritten, wie sie durch die US 1,803,054 A bekannt oder nahegelegt sind. Das bekannte Verfahren offenbart, dass im flüssigen Produkt die Strömungsgeschwindigkeit erzeugt wird, die den zum Ansaugen des dampfförmigen Wärmeträgers notwendigen Druckabfall erzeugt. Um die Wärmeübergangs- und die Wärmeeindringbedingungen in das flüssige Produkt zu verbessern, wird der Strom des flüssigen Produkts als zentraler ringförmiger Treibstrahl ausgebildet und dieser erhält, bezogen auf eine durch die Längsachse des Mischraumes verlaufende Ebene, einen Strömungsquerschnitt, dessen Erstreckung in radialer Richtung klein gegenüber einer orthogonalen zweiten Richtung ist. Die derart geformte, als Treibstrahl fungierende Strömung des flüssigen Produkts erfährt dadurch vor Eintritt in den Mischraum eine Geschwindigkeitserhöhung, die den zum Ansaugen des dampfförmigen Wärmeträgers notwendigen Druckabfall generiert. Die Eindringrichtung des angesaugten dampfförmigen Wärmeträgers orientiert sich hauptsächlich in die radiale Richtung, wobei der Strom des dampfförmigen Wärmeträgers im Bereich des vorg. Druckabfalls mit eben dieser radialen Strömungskomponente angesaugt wird und radial außenseits auf das flüssige Produkt auftrifft. Gleichzeitig erhält der Strom des dampfförmigen Wärmeträgers im Bereich des Druckabfalls an seiner Einleitungsstelle in das flüssige Produkt eine Strömungskomponente in Richtung der Strömungsgeschwindigkeit des flüssigen Produkts. Schließlich bleibt im weiteren Verlauf des Verfahrens das durch die vorstehend beschriebene Behandlung erzeugte Gemisch aus flüssigem Produkt und dampfförmigem Wärmeträger unverzweigt und durchläuft stromabwärts in wenigstens einer weiteren Stufe des Verfahrens eine weitere Behandlung in der vorstehend beschriebenen Weise bzw. Schrittfolge. Die Beaufschlagung des Produkts mit der notwendigen Menge an dampfförmigem Wärmeträger wird demnach auf mehr als eine Stelle der Produktströmung aufgeteilt, wobei jede Produktteilmenge diese Mehrfachbehandlung in einem quasi mehrstufigen Verfahren erfährt.

Der grundlegende erfinderische Lösungsgedanke besteht mit Blick auf das vorgeschlagene Verfahren der vorstehend beschriebenen gattungsgemäßen Art darin, dass das flüssige Produkt und der kondensierende dampfförmige Wärmeträger im Mischraum durchmischt werden und diesen mit einer einstellbaren Verweilzeit bei einer moderat ansteigenden Strömungsgeschwindigkeit längs ihres Strömungsweges durchströmen. Dabei bleibt die grundlegende Form des Strömungsquerschnittes im Mischraum im Wesentlichen so erhalten, wie sie vor Eintritt in den Mischraum generiert wurde. In einem weiteren Schritt wird der Strom des dampfförmigen Wärmeträgers im Bereich des Druckabfalls an seiner Einleitungsstelle in das flüssige Produkt in Richtung der Strömungsgeschwindigkeit des flüssigen Produkts quasi diffusorartig aufgefächert Diese Erweiterung des Stromes des dampfförmigen Wärmeträgers vergrößert die Kontaktzone zwischen Produkt und Wärmeträger und verbessert dadurch den Stoff- und damit auch den Wärmeübergang. Ein weiterer Schritt sieht vor, da die Strömung des flüssigen Produkts in der zweiten Richtung eine um ein Vielfaches größere Erstreckung als in der ersten, der radialen Richtung aufweist, dass verfahrenstechnisch sichergestellt ist, dass der Strom des dampfförmigen Wärmeträgers seiner Einleitungsstelle in das flüssige Produkt gleichmäßig verteilt zugeführt wird. Darüber hinaus ist auch verfahrenstechnisch sichergestellt, dass der Strom des dampfförmigen Wärmeträgers seinen parallel zu versorgenden Einleitungsstellen in das flüssige Produkt im Rahmen des quasi mehrstufigen Verfahrens gleichmäßig verteilt zugeführt wird.

### KURZBESCHREIBUNG DER ZEICHNUNGEN

Ein Ausführungsbeispiel des Injektors gemäß der Erfindung ist in den Figuren der Zeichnung dargestellt und wird nachfolgend beschrieben. Es zeigen
- **Figur 1**: eine in **Figur 3** mit **"X"** gekennzeichnete Einzelheit im Bereich der Einleitungsstelle des dampfförmigen Wärmeträgers in das flüssige Produkt;
- **Figur 2**: in perspektivischer Darstellung einen in seiner Meridianebene aufgeschnittenen Injektor gemäß der Erfindung und
- **Figur 3**: eine Schnittdarstellung des Injektors gemäß **Figur 2** (Blickrichtung senkrecht auf die Schnittebene).

### BESCHREIBUNG

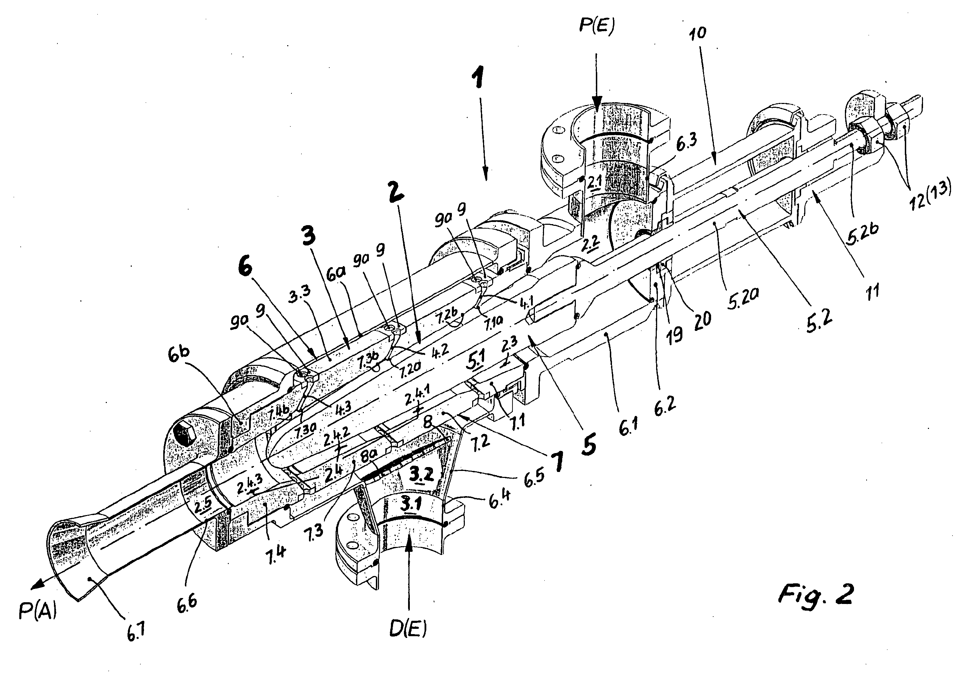

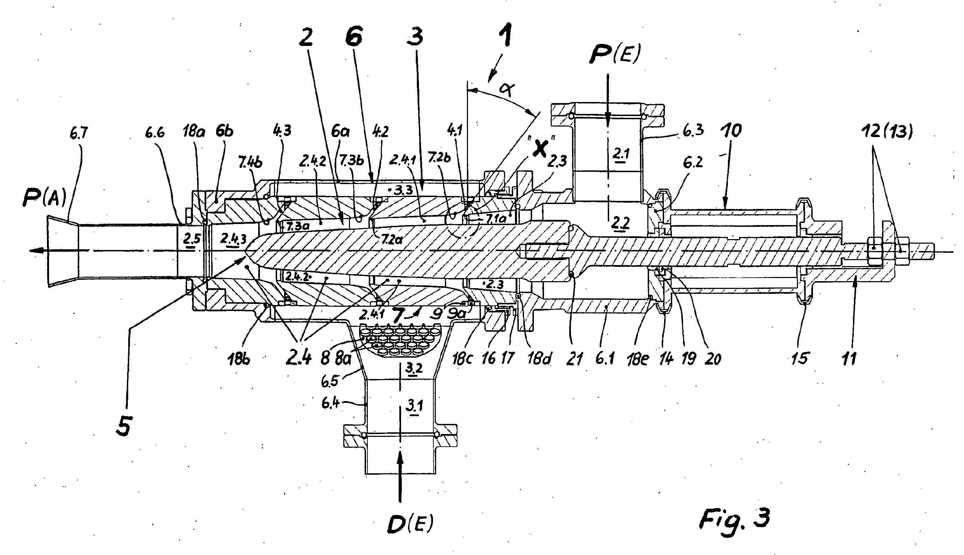

Ein Injektor 1 (nachfolgend wird jeweils auf die geeignetste der **Figuren 2** oder **3** Bezug genommen und Lageangaben beziehen sich auf die Darstellungslage des Injektors) wird außenseits von einem rohrförmigen Injektorgehäuse 6 begrenzt, das mit einem zylindrischen Mantelteil 6a ein ringförmiges inneres Gehäuse 7 konzentrisch umschließt, letzteres links- und stirnseitig mit einem Kragenteil 6b teilweise umgreift und rechtsseitig in einem nicht näher bezeichneten Flansch endet, der innenseits im Bereich des rechtsseitigen Endes des inneren Gehäuses 7 gegenüber letzterem über eine dritte Gehäusedichtung 18c radial abgedichtet ist (**Figur 3**). Zwischen der äußeren Mantelfläche des inneren Gehäuses 7 und dem Mantelteil 6a ist ein äußerer Ringraum 3.3 ausgebildet, der Teil eines zweiten Beaufschlagungsraumes 3 zur Bereitstellung und Verteilung eines dampfförmigen Wärmeträgers D ist. Bei diesem handelt es sich insbesondere um Wasserdampf, vorzugsweise um sog. kulinarischen Wasserdampf im Sättigungszustand (Sattdampf)), der dem zweiten Beaufschlagungsraum 3, ausgehend von einem Dampfeintritt D(E), über einen zweiten Einlass 6.4, der innenseits einen vorzugsweise zylindrischen zweiten Eintrittsraum 3.1 ausbildet, und einen sich fluchtend anschließenden vorzugsweise konischen Erweiterungsstutzen 6.5, der innenseits einen entsprechend konisch erweiterten Raum 3.2 ausbildet, zugeführt wird. Die Längsachse des Erweiterungsstutzens 6.5 mündet ein Stück rechts von der Mitte der axialen Länge des zweiten Beaufschlagungsraumes 3 in letzteren ein. Der zweite Beaufschlagungsraum 3 ist an seinem linksseitigen Ende über eine zweite Gehäusedichtung 18b, die zwischen dem Injektorgehäuse 6 und dem inneren Gehäuse 7 axial/radial eingespannt ist, nach außen abgedichtet. Das rechtsseitige Ende des inneren Gehäuses 7 ragt ein Stück über die rechtsseitige Stirnfläche des Flansches am Injektorgehäuse 6 hinaus und ist dort stirnseitig gegen ein Eintrittsgehäuse 6.1 über eine vierte Gehäusedichtung 18d axial abgedichtet. Das Eintrittsgehäuse 6.1 bildet an der Abdichtungsstelle mit dem inneren Gehäuse 7 einen nicht näher bezeichneten Flansch aus, der mit dem korrespondierenden Flansch am Injektorgehäuse 6 verschraubt ist.

In das ringförmige innere Gehäuse 7 greift von rechts ein in axialer Richtung verschieblicher Dorn 5 ein, der in seinem linksseitigen Teil in Form eines überwiegend konusförmigen, zum linksseitigen Ende sich verjüngenden, rotationssymmetrischen Verdrängerkörpers 5.1 ausgebildet ist (**Figur 2**). Zwischen dem Verdrängerkörper 5.1 und dem letzteren umschließenden ringförmigen inneren Gehäuse 7 wird ein ringförmiger Mischraum 2.4 gebildet, der Teil eines ersten Beaufschlagungsraumes 2 für ein flüssiges Produkt P ist. An den Mischraum 2.4 schließt sich rechtsseitig ein zwischen dem rechtsseitigen Ende des inneren Gehäuses 7 und dem Verdrängerkörper 5.1 gebildeter innerer erster Ringraum 2.3 an, der gleichfalls Teil des ersten Beaufschlagungsraumes 2 ist, sich düsenförmig in Richtung des Mischraumes 2.4 verjüngt und mit einer im Eintrittsgehäuse 6.1 ausgebildeten Eintrittskammer 2.2 unmittelbar verbunden ist. Das Eintrittsgehäuse 6.1 besitzt einen ersten Einlass 6.3 für die Zufuhr des flüssigen Produkts P, der innenseits vorzugsweise einen zylindrischen ersten Eintrittsraum 2.1 ausbildet, wobei letzterer mit der Eintrittskammer 2.2 unmittelbar verbunden ist. Ein Produkteintritt P(E) in den ersten Beaufschlagungsraum 2 erfolgt somit am ersten Einlass 6.3 und das flüssige Produkt P gelangt anschließend über den Eintrittsraum 2.1, die sich anschließende Eintrittskammer 2.2, den düsenartig verjüngten inneren ersten Ringraum 2.3 in den ringförmigen Mischraum 2.4, um diesen über einen vorzugsweise zylindrisch ausgeführten Austrittsraum 2.5, der in einem sich linksseitig an das Kragenteil 6b anschließenden Auslass 6.6 ausgebildet ist, zu verlassen. An den Auslass 6.6 schließt sich eine Rohrerweiterung 6.7 an, über die ein Produktaustritt P(A) in eine abführende Rohrleitung einer nachgeordneten Prozessanlage erfolgt.

Ein am Auslass 6.6 ausgebildeter, nicht näher bezeichneter Flansch ist mit dem Kragenteil 6b verschraubt und dieser Flansch ist gegen eine korrespondierende stirnseitigen Begrenzungsfläche des inneren Gehäuses 7 über eine erste Gehäusedichtung 18a axial abgedichtet. Der Kragenteil 6b ist somit zwischen dem Flansch am Auslass 6.6 und dem innerem Gehäuse 7 sowohl axial als auch radial formschlüssig festgelegt und die gesamte Aggregation, bestehend aus den Teilen 6, 6.6 mit 6.7, 7 und 6.1 mit 6.3, wird durch die Schraubverbindung zwischen dem Flansch am Injektorgehäuse 6 und dem Flansch am Eintrittsgehäuse 6.1 zusammengehalten, in sich verspannt und an den erwähnten Abdichtungsstellen 18a bis 18d nach außen gedichtet.

Eine erste Spannbuchse 16 greift von rechts in die Bohrung im Flansch am Injektorgehäuse 6 ein, kontaktiert an ihrem dortigen Ende die dritte Gehäusedichtung 18c und umfasst mit einem Bund den Flansch am Injektorgehäuse 6. Die erste Spannbuchse 16 ist innenseits mit einer zweiten Spannbuchse 17 verschraubt, wobei letztere an ihrem rechtsseitigen Ende mit einem nicht bezeichneten Kragen in eine nicht bezeichnete nutförmige Ausnehmung zwischen der Stirnfläche des inneren Gehäuses 7 und dem Flansch am Eintrittsgehäuse 6.1 radial nach innen formschlüssig eingreift. Mit dieser Spannbuchsenanordnung 16/17 lassen sich im Zusammenwirken mit der Verschraubung zwischen dem Flansch am Injektorgehäuse 6 und dem Flansch am Eintrittsgehäuse 6.1 der Anpressdruck der Gehäusedichtungen 18a, 18b und 18c sowie der axiale Anpressdruck zwischen den nachstehend noch beschriebenen Gehäuseringen, aus denen das innere Gehäuse 7 zweckmäßig zusammengesetzt ist, einstellen. Darüber hinaus zentriert der Kragen an der zweiten Spannbuchse 17 das Eintrittsgehäuse 6.1 gegenüber dem inneren Gehäuse 7, wobei das Eintrittsgehäuse 6.1 unter Einschluss der vierten Gehäusedichtung 18d metallisch am inneren Gehäuse 7 anliegt.

Der erste Beaufschlagungsraum 2 findet am rechtsseitigen Ende des Eintrittsgehäuses 6.1 seinen Abschluss über einen Deckel 6.2, der über eine fünfte Gehäusedichtung 18e in einer Öffnung im Eintrittsgehäuse 6.1 abgedichtet und dort über einen nicht näher bezeichneten Klemmflansch an einem Laternengehäuse 10 mittels eines ersten Spannringes 14 form- und kraftschlüssig festgelegt ist. In den Verdrängerkörper 5.1 ist rechtsseitig eine Verstellstange 5.2 eingeschraubt, die an der Verschraubungsstelle mittels einer Dichtung 21 gegen den Verdrängerkörper 5.1 abgedichtet ist. Die Verstellstange 5.2 besteht in ihrem linksseitigen Teil aus einer durchmessergrößeren Führungsstange 5.2a und in ihrem rechtsseitigen Teil aus einer durchmesserkleineren Befestigungsstange 5.2b (Figur 2). Die Führungsstange 5.2a durchdringt den Deckel 6.2 und den Flansch am Laternengehäuse 10 über eine Stangendichtung 19 und einen sich anschließenden Führungsring 20. An das Laternengehäuse 10 ist rechtsseitig ein Bügelteil 11 angeflanscht, wobei diese Verbindung mit einem zweiten Spannring 15, ähnlich jener zwischen Deckel 6.2 und Laternengehäuse 10, ausgebildet ist. Die mit einem Bolzengewinde versehene Befestigungsstange 5.2b durchdringt eine endseitige Abkröpfung des Bügelteils 11, so dass die Befestigungsstange 5.2b und somit der gesamte Dorn 5 mittels jeweils einer auf jeder Seite der Abkröpfung auf dem Bolzengewinde aufgeschraubten Verstellmutter 12 in axialer Richtung festgelegt werden kann. Durch diese Anordnung ist der Dorn 5 in die notwendige axiale Lage im Mischraum 2.4 zu verschieben und schließlich unverrückbar festzulegen.

Alternativ ist auch eine motorische Verstellung des Dorns 5 vorgesehen, beispielsweise über einen elektrisch, pneumatisch oder hydraulisch betätigten Verstellantrieb 13, der ein an der Verstellstange 5.2 bzw. der Befestigungsstange 5.2b angreifendes, geeignetes, nicht dargestelltes Spindel-Mutter-System antreibt.

Im ringförmigen inneren Gehäuse 7 ist am rechtsseitigen Ende eine erste Ringdüse 4.1 ausgebildet, die radial außenseits mit dem äußeren Ringraum 3.3 des zweiten Beaufschlagungsraumes 3 verbunden ist und die radial innenseits über eine ringspaltförmige erste Austrittsöffnung 4.1 a in den Mischraum 2.4 ausmündet (**Figur 1**). Über diese erste Ringdüse 4.1 wird der dampfförmige Wärmeträger D, von dem Dampfeintritt D(E) kommend, von dem aus dem düsenartig ausgebildeten inneren ersten Ringraum 2.3 austretenden, als Treibstrahl fungierenden Strom des flüssigen Produkts P, das über den Produkteintritt P(E) herangeführt wird, angesaugt. Die Ansaugung wird durch einen Druckabfall im flüssigen Produkt P erzeugt, der durch Geschwindigkeitserhöhung im Durchtrittsquerschnitt des Mischraumes 2.4 im Bereich der ringspaltförmigen ersten Austrittsöffnung 4.1 a generiert wird. Der düsenartig ausgebildete innere erste Ringraum 2.3 erzeugt im Bereich der ringsspaltförmigen ersten Austrittsöffnung 4.1 a generell eine diesbezügliche Geschwindigkeitserhöhung, die durch eine besondere Maßnahme im Austrittsende des inneren ersten Ringraums 2.3 deutlich verstärkt wird. Diese Maßnahme besteht darin, dass am inneren Gehäuse 7 bzw. 7.1, in Strömungsrichtung des flüssigen Produkts P gesehen, unmittelbar vor der ringspaltförmigen ersten Austrittsöffnung 4.1 a eine ringförmige erste Nase 7.1 a ausgebildet ist, die dort einen ersten Durchtrittsquerschnitt A₁ radial außenseits derart einschnürt, dass dieser, in Strömungsrichtung des flüssigen Produkts P gesehen, gegenüber dem vorgeordneten Durchtrittsquerschnitt des inneren Ringraumes 2.3 verkleinert ist.

Die ringförmige erste Nase 7.1 a und auch z.B. weitere Nasen 7.2a, 7.3a bei weiteren stromabwärts angeordneten Ringdüsen 4.2, 4.3 zwingen den ringförmigen Treibstrahl (flüssiges Produkt P) im Bereich der jeweiligen ringspaltförmigen Austrittsöffnung 4.1a, 4.2a, 4.3a in eine Strömungsform, deren Strömungsquerschnitt, bezogen auf eine durch die Längsachse des Mischraumes 2.4 verlaufende Ebene, in radialer Richtung eine Erstreckung aufweist, die klein gegenüber einer orthogonalen zweiten Richtung ist, wobei letztere im Wesentlichen mit der Strömungsrichtung des flüssigen Produkts P übereinstimmt.

Die ringspaltförmige erste Austrittsöffnung 4.1 a mündet von der Seite des umschließenden inneren Gehäuses 7, von radial außenseits, unter einem Neigungswinkel α gleichsinnig zur Strömungsrichtung des flüssigen Produkts P in den Mischraum 2.4 ein. Er wird gegen die Senkrechte auf die Längsachse des Mischraumes 2.4 gemessen, wo bei es sich als vorteilhaft erwiesen hat, wenn für den Neigungswinkel α ein Wert im Bereich 30 bis 45 Grad, bevorzugt ein Wert von 35 Grad vorgesehen ist.

Bezogen auf die Strömungsrichtung des flüssigen Produkts P geht die stromabwärtsseitige Begrenzungsfläche der ringspaltförmigen ersten Austrittsöffnung 4.1 a in eine umlaufende erste Anschrägung 7.2b am inneren Gehäuse 7 über, wobei die erste Anschrägung 7.2b eine größere Neigung gegen die Längsachse des Mischraumes 2.4 besitzt als die sich an die erste Anschrägung 7.2b anschließende Begrenzungsfläche des inneren Gehäuses 7. Der Übergang zwischen der stromabwärtsseitigen Begrenzungsfläche der ringspaltförmigen ersten Austrittsöffnung 4.1 a und der zugeordneten ersten Anschrägung 7.2b ist mit einem relativ großen Radius abgerundet.

Die in den **Figuren 2** und **3** dargestellte Ausführungsform des erfindungsgemäßen Injektors 1 weist, in Strömungsrichtung des flüssigen Produkts P gesehen, hinter der ersten Ringdüse 4.1 zwei weitere Ringdüsen 4.2 und 4.3 auf, die dampfförmigen Wärmeträger D aus dem äußeren Ringraum 3.3 des zweiten Beaufschlagungsraumes 3 in den unverzweigt bleibenden Strom des flüssigen Produkts P jeweils unter dem Neigungswinkel α einbringen. Das Umfeld der zweiten Ringdüse 4.2 und der dritten Ringdüse 4.3 ist jeweils identisch zur ersten Ringdüse 4.1 ausgebildet. Dies bezieht sich auf eine ringspaltförmige zweite Austrittsöffnung 4.2a, eine ringförmige zweite Nase 7.2a sowie eine umlaufende zweite Anschrägung 7.3b im Zusammenhang mit der zweiten Ringdüse 4.2 und auf eine ringspaltförmige dritte Austrittsöffnung 4.3a, eine ringförmige dritte Nase 7.3a sowie eine umlaufende dritte Anschrägung 7.4b im Zusammenhang mit der dritten Ringdüse 4.3 (**Figuren 1** bis **3**). Die ringförmige zweite Nase 7.2a bildet dabei unmittelbar vor Eintritt in den Mischraum 2.4 einen zweiten Durchtrittsquerschnitt A₂ und die ringförmige dritte Nase 7.3a bildet einen entsprechenden dritten Durchtrittsquerschnitt A₃ aus, der jeweils an der jeweiligen Stelle den Mischraum 2.4 derart einschnürt, dass dieser, in Strömungsrichtung des flüssigen Produkts P gesehen, gegenüber dem jeweils vorgeordneten Durchtrittsquerschnitt des Mischraumes 2.4 verkleinert ist.

Das ringförmige innere Gehäuse 7 (**Figur 2**) besteht aus separaten Gehäuseringen 7.1, 7.2, 7.3, 7.4, die, in Strömungsrichtung des flüssigen Produkts P gesehen, aneinandergereiht und über jeweils einen Verteilerring 9 im Bereich der jeweiligen Ringdüse 4.1, 4.2, 4.3 axial voneinander beabstandet sind, wobei die jeweilige innere Begrenzungsfläche der Gehäuseringen 7.1, 7.2, 7.3, 7.4 kegelstumpfförmig ausgebildet ist. Die jeweilige axiale Beabstandung der Gehäuseringe 7.1, 7.2, 7.3, 7.4 erzeugt jeweils einen umlaufenden Ringspalt, der die jeweilige Ringdüse 4.1, 4.2, 4.3 bildet.

Im ersten Gehäusering 7.1 ist im Zusammenwirken mit einem vorzugsweise zylindrisch ausgeführten Abschnitt des Verdrängerkörpers 5.1 der düsenförmige innere erste Ringraum 2.3 ausgebildet, während der zweite Gehäusering 7.2, der dritte Gehäusering 7.3 und der vierte Gehäusering 7.4, in Strömungsrichtung des flüssigen Produkts P gesehen und jeweils im Zusammenwirken mit dem sich hinter der ersten Ringdüse 4.1 und näherungsweise parallel zur inneren kegelstumpfförmigen Begrenzungsfläche des jeweils zugeordneten Gehäuserings 7.2 bis 7.3 verjüngenden Verdrängerkörpers 5.1, innenseits einen inneren zweiten Ringraum 2.4.1 bzw. einen inneren dritten Ringraum 2.4.2 bzw. eine Austrittskammer 2.4.3 ausbilden, die zusammen den Mischraum 2.4 bilden. Durch die vorstehend beschriebene Ausgestaltung des ersten Beaufschlagungsraumes 2 in seinem von dem Verdrängerkörper 5.1 durchdrungenen Erstreckungsbereich verjüngt sich, in Strömungsrichtung des flüssigen Produkts P gesehen, dieser Bereich fortlaufend.

Der jeweilige Eintritt der Ringdüse 4.1, 4.2, 4.3 ist von dem in das innere Gehäuse 7 außenseits radial eingreifenden Verteilerring 9 umschlossen, der, über seinen Umfang verteilt, eine Vielzahl von gleichmäßig voneinander beabstandeten Ringbohrungen 9a aufweist, die jeweils die Ringdüse 4.1, 4.2, 4.3 mit dem zweiten Beaufschlagungsraum 3 verbinden. Dadurch wird eine möglichst gleichmäßige Verteilung des dampfförmigen Wärmeträgers D innerhalb der jeweils zugeordneten Ringdüse erreicht.

Um eine gleichmäßige Verteilung des dampfförmigen Wärmeträgers D vom äußeren Ringraum 3.3 des zweiten Beaufschlagungsraumes 3 auf die parallel angeschlossenen Ringdüsen 4.1, 4.2 und 4.3 sicherzustellen, ist, in Strömungsrichtung des dampfförmigen Wärmeträgers D gesehen und vor dessen Eintritt in den zweiten Beaufschlagungsraum 3, in dem sich an den zweiten Einlass 6.4 anschließenden konusförmigen Erweiterungsstutzen 6.5 ein Leitblech 8 mit einer Vielzahl siebförmig angeordneter Verteilerbohrungen 8a vorgesehen ist, das den Durchtrittsquerschnitt des Erweiterungsstutzens 6.5 fast vollständig ausfüllt. Das Leitblech 8 ist dabei V-förmig gefaltet und die Faltkante verläuft in der Ebene des größten Durchmessers des konusförmigen Erweiterungsstutzens 6.5.

Das Verfahren zum Einleiten eines dampfförmigen Wärmeträgers D in ein flüssiges Produkt P, insbesondere in ein Nahrungsmittel oder Getränk, wie beispielsweise Milch, bei dem der dampfförmige Wärmeträger D das flüssige Produkt P zur Bildung eines keimfreien Produkts erhitzt und bei dem das Strömen des dampfförmigen Wärmeträgers D durch Druckabfall hervorgerufen wird, der durch die Geschwindigkeit des flüssigen Produkts P entsteht, wobei ein Injektor der vorstehend beschriebenen Art verwendet wird, ist insgesamt gekennzeichnet durch folgende durchzuführende Schritte (a) bis (i):
(a) der Strom des flüssigen Produkts P wird als zentraler ringförmiger Treibstrahl ausgebildet und erhält vor dem Einleiten in einen Mischraum 2.4 mit einstellbarem Volumen, bezogen auf eine durch die Längsachse des Mischraumes 2.4 verlaufende Ebene, einen erzwungenen Strömungsquerschnitt, dessen Erstreckung in radialer Richtung klein gegenüber einer orthogonalen zweiten Richtung ist;
(b) im Strom des flüssigen Produkts P wird vor Eintritt in den Mischraum 2.4 die den Druckabfall erzeugende Geschwindigkeit erzeugt;
(c) der Strom des dampfförmigen Wärmeträgers D wird im Bereich des Druckabfalls mit einer Strömungskomponente angesaugt, die, bezogen auf die durch die Längsachse des Mischraums 2.4 verlaufende Ebene, in radialer Richtung orientiert ist und radial außenseits auf das flüssige Produkt P auftrifft;
(d) der Strom des dampfförmigen Wärmeträgers D erhält im Bereich des Druckabfalls an seiner Einleitungsstelle in das flüssige Produkt P eine Strömungskomponente in Richtung der Strömungsgeschwindigkeit des Produkts P;
(e) das erzeugte Gemisch aus flüssigem Produkt P und dampfförmigem Wärmeträger D bleibt unverzweigt und durchläuft stromabwärts wenigstens eine weitere Schrittfolge (b) bis (d);
(f) das flüssige Produkt P und der kondensierende Wärmeträger D werden im Mischraum 2.4 durchmischt und durchströmen diesen mit einer einstellbaren Verweilzeit bei ansteigender Strömungsgeschwindigkeit längs ihres Strömungsweges, wobei die Form des Strömungsquerschnitts vor dem Mischraum 2.4 im Wesentlichen gemäß Schritt (a) beibehalten wird;
(g) der Strom des dampfförmigen Wärmeträgers D wird im Bereich des Druckabfalls an seiner Einleitungsstelle in das flüssige Produkt P in Richtung der Strömungsgeschwindigkeit des flüssigen Produkts P diffusorartig aufgefächert;
(h) der Strom des dampfförmigen Wärmeträgers D wird seiner Einleitungsstelle in das flüssige Produkt P gleichmäßig verteilt zugeführt;
(i) der Strom des dampfförmigen Wärmeträgers D wird seinen parallel zu versorgenden Einleitungsstellen in das flüssige Produkt P gleichmäßig verteilt zugeführt.

### BEZUGSZEICHENLISTE DER VERWENDETEN ABKÜRZUNGEN

- 1: Injektor

- 2: erster Beaufschlagungsraum (Produkt)
- 2.1: zylindrischer erster Eintrittsraum
- 2.2: Eintrittskammer
- 2.3: innerer erster Ringraum

- 2.4: Mischraum
- 2.4.1: innerer zweiter Ringraum
- 2.4.2: innerer dritter Ringraum
- 2.4.3: Austrittskammer

- 2.5: zylindrischer Austrittsraum

- 3: zweiter Beaufschlagungsraum (Wasserdampf)
- 3.1: zylindrischer zweiter Eintrittsraum
- 3.2: konisch erweiterter Raum
- 3.3: äußerer Ringraum

- 4.1: erste Ringdüse
- 4.2: zweite Ringdüse
- 4.3: dritte Ringdüse

- 4.1 a: ringspaltförmige erste Austrittsöffnung
- 4.2a: ringspaltförmige zweite Austrittsöffnung
- 4.3a: ringspaltförmige dritte Austrittsöffnung

- 5: Dorn
- 5.1: Verdrängerkörper
- 5.2: Verstellstange
- 5.2a: Führungsstange
- 5.2b: Befestigungsstange

- 6: Injektorgehäuse
- 6a: Mantelteil
- 6b: Kragenteil

- 6.1: Eintrittsgehäuse
- 6.2: Deckel
- 6.3: erster Einlass
- 6.4: zweiter Einlass
- 6.5: Erweiterungsstutzen
- 6.6: Auslass
- 6.7: Rohrerweiterung

- 7: inneres Gehäuse
- 7.1: erster Gehäusering
- 7.2: zweiter Gehäusering
- 7.3: dritter Gehäusering
- 7.4: vierter Gehäusering

- 7.1 a: ringförmige erste Nase
- 7.2a: ringförmige zweite Nase
- 7.3a: ringförmige dritte Nase

- 7.2b: umlaufende erste Anschrägung
- 7.3b: umlaufende zweite Anschrägung
- 7.4b: umlaufende dritte Anschrägung

- 8: Leitblech
- 8a: Verteilerbohrung

- 9: Verteilerring
- 9a: Ringbohrung

- 10: Laternengehäuse
- 11: Bügelteil
- 12: Verstellmutter
- 13: Verstellantrieb
- 14: erster Spannring
- 15: zweiter Spannring
- 16: erste Spannbuchse
- 17: zweite Spannbuchse

- 18a: erste Gehäusedichtung
- 18b: zweite Gehäusedichtung
- 18c: dritte Gehäusedichtung
- 18d: vierte Gehäusedichtung
- 18e: fünfte Gehäusedichtung

- 19: Stangendichtung
- 20: Führungsring
- 21: Dichtung

- A₁: erster Durchtrittsquerschnitt
- A₂: zweiter Durchtrittsquerschnitt
- A₃: dritter Durchtrittsquerschnitt
- D: dampfförmiger Wärmeträger (Wasserdampf; kulinarischer Sattdampf); zweites Arbeitsfluid
- D(E): Dampfeintritt

- P: flüssiges Produkt; erstes Arbeitsfluid
- P(E): Produkteintritt
- P(A): Produktaustritt

- *α*: Neigungswinkel

## Patentansprüche

1. Injektor zum Einleiten eines dampfförmigen Wärmeträgers in ein flüssiges Produkt, insbesondere ein Nahrungsmittel oder Getränk, bei dem der dampfförmige Wärmeträger (D) das flüssige Produkt (P) zur Bildung eines keimfreien Produkts erhitzt und bei dem das Strömen des dampfförmigen Wärmeträgers (D) durch Druckabfall hervorgerufen wird, der durch die Geschwindigkeit des flüssigen Produkts (P) entsteht, mit einem Injektorgehäuse (6), das einen ersten Einlass (6.3) für das flüssige Produkt (P) und einen zweiten Einlass (6.4) für den dampfförmigen Wärmeträger (D) aufweist, mit einem im Injektorgehäuse (6) einen Auslass (6.6) aufweisenden ersten Beaufschlagungsraum (2), der eintrittsseitig düsenförmig ausgebildet und mit dem ersten Einlass (6.3) verbunden ist, mit einem ringförmigen Mischraum (2.4), der Teil des ersten Beaufschlagungsraumes (2) ist und der zwischen einem rotationssymmetrischen, in axialer Richtung verschieblichen Verdrängerkörper (5.1) einerseits und einem letzteren umschließenden ringförmigen inneren Gehäuse (7) andererseits gebildet wird, und mit einem zwischen dem inneren Gehäuse (7) und dem dieses umschließenden Injektorgehäuse (6) gebildeten ringförmigen zweiten Beaufschlagungsraum (3), der mit dem zweiten Einlass (6.4) verbunden ist, mit mehr als einer Ringdüse (4.1, 4.2, 4.3, ...), die, in Strömungsrichtung des flüssigen Produkts (P) gesehen, im Abstand hintereinander angeordnet, jeweils vom dampfförmigen Wärmeträger (D) beaufschlagbar, im oder am inneren Gehäuse (7) ausgebildet und mit dem zweiten Beaufschlagungsraum (3) verbunden sind und die über eine ringspaltförmige Austrittsöffnung (4.1 a, 4.2a, 4.3a, ...) von der Seite des umschließenden inneren Gehäuses (7) unter einem Neigungswinkel (α) gleichsinnig zur Strömungsrichtung des flüssigen Produkts (P) in den Mischraum (2.4) einmünden,
**dadurch gekennzeichnet,**
**dass** am inneren Gehäuse (7), in Strömungsrichtung des flüssigen Produkts (P) gesehen, unmittelbar vor der jeweiligen ringspaltförmigen Austrittsöffnung (4.1a, 4.2a, 4.3a, ...) jeweils eine ringförmige Nase (7.1 a, 7.2a,
7.3a, ...) ausgebildet ist, die an der jeweiligen Stelle einen Durchtrittsquerschnitt (A₁, A₂, A₃, ...) des Mischraumes (2.4; 2.4.1, 2.4.2, 2.4.3, ...) radial außenseits derart einschnürt, dass dieser Durchtrittsquerschnitt (A₁, A₂, A₃, ...), in Strömungsrichtung des flüssigen Produkts (P) gesehen, gegenüber einem diesem jeweils vorgeordneten Durchtrittsquerschnitt verkleinert ist.

2. Injektor nach Anspruch 1,
**dadurch gekennzeichnet,**
**dass** der Neigungswinkel (α) gegen die Senkrechte auf die Längsachse des Mischraumes (2.4) gemessen wird, und dass für den Neigungswinkel (α) ein Wert im Bereich 30 bis 45 Grad, bevorzugt ein Wert von 35 Grad vorgesehen ist.

3. Injektor nach Anspruch 1 oder 2,
**dadurch gekennzeichnet,**
**dass**, bezogen auf die Strömungsrichtung des flüssigen Produkts (P), die stromabwärtsseitige Begrenzungsfläche der jeweiligen ringspaltförmigen Austrittsöffnung (4.1 a, 4.2a, 4.3a, ...) in eine umlaufende Anschrägung (7.2b, 7.3b, 7.4b, ...) am inneren Gehäuse (7) übergeht, wobei die jeweilige Anschrägung (7.2b, 7.3b, 7.4b, ...) eine größere Neigung gegen die Längsachse des Mischraumes (2.4) besitzt als die sich an die jeweilige Anschrägung jeweils stromabwärts anschließende Begrenzungsfläche des inneren Gehäuses (7).

4. Injektor nach Anspruch 3,
**dadurch gekennzeichnet,**
**dass** der Übergang zwischen der stromabwärtsseitigen Begrenzungsfläche der jeweiligen ringspaltförmigen Austrittsöffnung (4.1a, 4.2a, 4.3a, ...) und der jeweils zugeordneten umlaufenden Anschrägung (7.2b, 7.3b, 7.4b, ...) abgerundet ausgeführt ist.

5. Injektor nach einem der Ansprüche 1 bis 4,
**dadurch gekennzeichnet,**
**dass** der jeweilige Eintritt der Ringdüse (4.1, 4.2, 4.3, ...) von einem in das innere Gehäuse (7) außenseits radial eingreifenden Verteilerring (9) umschlossen ist, der, über seinen Umfang verteilt, eine Vielzahl von gleichmäßig voneinander beabstandeten Ringbohrungen (9a) aufweist, die jeweils die Ringdüse (4.1, 4.2, 4.3, ...) mit dem zweiten Beaufschlagungsraum (3) verbinden.

6. Injektor nach einem der Ansprüche 1 bis 5,
**dadurch gekennzeichnet,**
**dass**, in Strömungsrichtung des dampfförmigen Wärmeträgers (D) gesehen und vor dessen Eintritt in den zweiten Beaufschlagungsraum (3), in einem sich an den zweiten Einlass (6.4) anschließenden konusförmigen Erweiterungsstutzen (6.5) ein Leitblech (8) mit einer Vielzahl siebförmig angeordneter Verteilerbohrungen (8a) vorgesehen ist, das den Durchtrittsquerschnitt des Erweiterungsstutzens (6.5) fast vollständig ausfüllt.

7. Injektor nach Anspruch 6,
**dadurch gekennzeichnet,**
**dass** das Leitblech (8) V-förmig gefaltet ist und die Faltkante in der Ebene des größten Durchmessers des konusförmigen Erweiterungsstutzens (6.5) verläuft.

8. Injektor nach einem der Ansprüche 1 bis 7,
**dadurch gekennzeichnet,**
**dass** sich der Durchtrittsquerschnitt des ersten Beaufschlagungsraumes (2) in seinem von dem Verdrängerkörper (5.1) durchdrungenen Erstreckungsbereich, in Strömungsrichtung des flüssigen Produkts (P) gesehen, fortlaufend verjüngt.

9. Injektor nach einem der Ansprüche 1 bis 8,
**dadurch gekennzeichnet,**
**dass** das innere Gehäuse (7) aus separaten Gehäuseringen (7.1, 7.2, 7.3, 7.4, ...) besteht, die, in Strömungsrichtung des flüssigen Produkts (P) gesehen, aneinandergereiht und über die Verteilerringe (9) im Bereich der jeweiligen Ringdüse (4.1, 4.2, 4.3, ...) axial voneinander beabstandet sind, wobei die jeweilige innere Begrenzungsfläche der Gehäuseringe (7.1, 7.2, 7.3, 7.4, ...) kegelstumpfförmig ausgebildet ist.

10. Injektor nach einem der Ansprüche 1 bis 9,
**dadurch gekennzeichnet,**
**dass** sich der Verdrängerkörper (5.1), in Strömungsrichtung des flüssigen Produkts (P) gesehen, hinter der ersten Ringdüse (4.1) und näherungsweise parallel zur inneren Begrenzungsfläche des inneren Gehäuses (7) verjüngt.

11. Injektor nach einem der Ansprüche 1 bis 10,
**dadurch gekennzeichnet,**
**dass** der Verdrängerkörper (5.1) manuell oder motorisch verschoben wird.

12. Verfahren zum Einleiten eines dampfförmigen Wärmeträgers in ein flüssiges Produkt, insbesondere in ein Nahrungsmittel oder Getränk, bei dem der dampfförmige Wärmeträger (D) das flüssige Produkt (P) zur Bildung eines keimfreien Produkts erhitzt und bei dem das Strömen des dampfförmigen Wärmeträgers (D) durch Druckabfall hervorgerufen wird, der durch die Geschwindigkeit des flüssigen Produkts (P) entsteht, wobei ein Injektor nach einem der vorhergehenden Ansprüche verwendet wird, und wobei
• in einer ersten Stufe des Verfahrens folgende an sich bekannte Schritte (a) bis (d) durchgeführt werden:
(a) der Strom des flüssigen Produkts (P) wird als zentraler ringförmiger Treibstrahl ausgebildet und erhält vor dem Einleiten in einen Mischraum (2.4) mit einstellbarem Volumen, bezogen auf eine durch die Längsachse des Mischraumes (2.4) verlaufende Ebene, einen erzwungenen Strömungsquerschnitt, dessen Erstreckung in radialer Richtung klein gegenüber einer orthogonalen zweiten Richtung ist;
(b) im Strom des flüssigen Produkts (P) wird vor Eintritt in den Mischraum (2.4) die den Druckabfall erzeugende Geschwindigkeit erzeugt;
(c) der Strom des dampfförmigen Wärmeträgers (D) wird im Bereich des Druckabfalls mit einer Strömungskomponente angesaugt, die, bezogen auf die durch die Längsachse des Mischraums (2.4) verlaufende Ebene, in radialer Richtung orientiert ist und radial außenseits auf das flüssige Produkt (P) auftrifft;
(d) der Strom des dampfförmigen Wärmeträgers (D) erhält im Bereich des Druckabfalls an seiner Einleitungsstelle in das flüssige Produkt (P) eine Strömungskomponente in Richtung der Strömungsgeschwindigkeit des Produkts (P);
• und wobei in wenigstens einer weiteren Stufen des Verfahrens in an sich bekannter Weise
(e) das erzeugte Gemisch aus flüssigem Produkt (P) und dampfförmigem Wärmeträger (D) unverzweigt bleibt und stromabwärts wenigstens eine weitere Schrittfolge (a) bis (d) durchläuft,
**gekennzeichnet**
**durch** die folgenden durchzuführenden weiteren Schritte (f) bis (i):
(f) das flüssige Produkt (P) und der kondensierende Wärmeträger (D) werden im Mischraum (2.4) durchmischt und durchströmen diesen mit einer einstellbaren Verweilzeit bei ansteigender Strömungsgeschwindigkeit längs ihres Strömungsweges, wobei die Form des Strömungsquerschnitts vor dem Mischraum (2.4) im Wesentlichen gemäß Schritt (a) beibehalten wird;
(g) der Strom des dampfförmigen Wärmeträgers (D) wird im Bereich des Druckabfalls an seiner Einleitungsstelle in das flüssige Produkt (P) in Richtung der Strömungsgeschwindigkeit des flüssigen Produkts (P) diffusorartig aufgefächert;
(h) der Strom des dampfförmigen Wärmeträgers (D) wird seiner Einleitungsstelle in das flüssige Produkt (P) gleichmäßig verteilt zugeführt;
(i) der Strom des dampfförmigen Wärmeträgers (D) wird seinen parallel zu versorgenden Einleitungsstellen in das flüssige Produkt (P) gleichmäßig verteilt zugeführt.

## Claims

1. An injector for introducing a gaseous heat distributor into a liquid product, especially a food or beverage, wherein the gaseous heat distributor (D) heats the liquid product (P) to form a germ-free product, and wherein the flow of the gaseous heat distributor (D) is generated by a decrease in pressure that arises from the speed of the liquid product (P), with an injector housing (6) having a first inlet (6.3) for the liquid product (P) and a second inlet (6.4) for the gaseous heat distributor (D), with a first admission chamber (2) which is in the injector housing (6) and has an outlet (6.6) and is designed at the inlet side in the shape of a nozzle and is connected to the first inlet (6.3), with an annular mixing chamber (2.4) that is part of the first admission chamber (2) and is formed between a rotationally symmetrical displacement body (5.1) shiftable in an axial direction and an annular inner housing (7) enclosing the latter, and with an annular second admission chamber (3) that is formed between the inner housing (7) and the injector housing (6) enclosing it and is connected to the second inlet (6.4), with more than one ring nozzle (4.1, 4.2, 4.3,...) that, viewed in the direction of flow of the liquid product (P) are arranged sequentially spaced and can each be supplied with the gaseous heat distributor (D), and are formed in or on the inner housing (7), and are connected to the second admission chamber (3) and end in the mixing chamber (2.4) via an exit opening (4.1a, 4.2a, 4.3a,...) in the shape of an annular gap from the side of the surrounding inner housing (7) at an angle of inclination (α) in the same direction as the direction of flow of the liquid product (P),
**characterized in that**
viewed in the direction of flow of the liquid product (P), an annular projection (7.1a, 7.2a, 7.3a,...) is formed in each case on the inner housing (7) directly before the respective exit opening (4.1a, 4.2a, 4.3a,...) in the shape of an annular gap and narrows radially on the outside at the respective location of a passage cross-section (A₁, A₂, A₃, ...) of the mixing chamber (2.4, 2.4.1, 2.4.2, 2.4.3,...), such that this passage cross-section (A₁, A₂, A₃, ...) decreases relative to an upstream passage cross section viewed in the direction of flow of the liquid product (P).

2. The injector according to claim 1,
**characterized in that**
the angle of inclination (α) is measure relative to the perpendicular on the longitudinal axis of the mixing chamber (2. 4), and that a value within the range of 30 to 45°, preferably a value of 35° is provided for the angle of inclination (α).

3. The injector according to claim 1 and 2,
**characterized in that**
the boundary surface of the respective exit opening (4.1a, 4.2a, 4.3a,...) in the shape of an annular gap downstream relative to the direction of flow of the liquid product (P) transitions into a peripheral bevel (7.2b, 7.3b, 7.4b,...) on the inner housing (7), wherein the respective bevel (7.2b, 7.3b, 7.4b,...) has a greater angle relative to the longitudinal axis of the mixing chamber (2.4) than the boundary surface of the inner housing (7) following the respective bevel downstream.

4. The injector according to claim 3,
**characterized in that**
the transition between the downstream-side boundary surface of the respective exit opening (4.1a, 4.2a, 4.3a,...) in the shape of an annular gap and each assigned peripheral bevel (7.2b, 7.3b, 7.4b,...) is designed rounded.

5. The injector according to one of claims 1 to 4,
**characterized in that**
the respective entrance of the ring nozzle (4.1, 4.2, 4.3, ...) is enclosed by a radially engaging distributor ring (9) in the outside of the inner housing (7) that has a plurality of evenly spaced annular holes (9a) distributed over its perimeter that each connect the ring nozzle (4.1, 4.2, 4.3,...) to the second admission chamber (3).

6. The injector according to one of claims 1 to 5,
**characterized in that**
a baffle plate (8) with a plurality of distributor holes (8a) in a sieve-like arrangement is provided in a conical expansion fitting (6.5) following the seconds inlet (6.4) viewed in the direction of flow of the gaseous heat distributor (D) before its entrance into the second admission chamber (3), and it almost completely fills the passage cross-section of the expansion fitting (6.5).

7. The injector according to claim 6,
**characterized in that**
the baffle plate (8) is folded in a V-shape and the folded edge runs in the plane of the greatest diameter of the conical expansion fitting (6.5).

8. The injector according to one of claims 1 to 7,
**characterized in that**
the passage cross-section of the first admission chamber (2) continuously narrows in its extension penetrated by the displacement body (5.1) viewed in the direction of flow of the liquid product (P).

9. The injectior according to one of claims 1 to 8,
**characterized in that**
the inner housing (7) consists of separate housing rings (7.1, 7.2, 7.3, 7.4,...) that, viewed in the direction of flow of the liquid product (P), are spaced sequentially at an axial distance from each other over the distributor rings (9) in the area of the respective ring nozzle (4.1, 4.2, 4.3,...) , wherein the respective inner boundary surface of the housing rings (7.1, 7.2, 7.3, 7.4,...) is designed as a conical frustum.

10. The injector according to one of claims 1 to 9,
**characterized in that**
the displacement body (5.1), viewed in the direction of flow of the liquid product (P), narrows after the first ring nozzle (4.1) approximately parallel to the inner boundary surface of the inner housing (7).

11. The injector according to one of claims 1 to 10,
**characterized in that**
the displacement body (5.1) is shifted manually or by a motor.

12. A method for introducing a gaseous heat distributor into a liquid product, especially a food or beverage, wherein the gaseous heat distributor (D) heats the liquid product (P) to form a germ-free product, and wherein the flow of the gaseous heat distributor (D) is generated by a decrease in pressure that arises from the speed of the liquid product (P), wherein an injector is used according to one of the prior claims, and wherein:
- the following steps (a) to (d) known in principle are executed in a first stage of the method:
(a) the flow of the liquid product (P) is formed as a central, annular driving jet and, before being introduced into a mixing chamber (2.4) with an adjustable volume with reference to a plane passing through the longitudinal axis of the mixing chamber (2.4), is forced into a flow cross-section with an extension in the radial direction that is small relative to an orthogonal second direction;
(b) the speed generating the drop in pressure is generated in the flow of the liquid product (P) before it enters the mixing chamber (2.4);
(c) the flow of the gaseous heat distributor (D) is drawn in the area of the pressure drop at a flow component that, relative to the plane running through the longitudinal axis of the mixing chamber (2.4), is oriented in a radial direction and contacts the liquid product (P) radially to the outside;
(d) the flow of the gaseous heat distributor (D) receives a flow component in the direction of the flow speed of the product (P) in the area of the pressure drop at its site of introduction into the liquid product (P);
- and wherein in at least one additional stage of the method in a manner known in principle,
(e) the generated mixture consisting of the liquid product (P) and gaseous heat distributor (D) remains unbranched and passes through at least one additional sequence of steps (a) to (d) downstream in a know manner,
**characterized**
**by** the following additional steps (f) to (i) to be executed:
(f) the liquid product (P) and the condensing heat distributor (D) are mixed in the mixing chamber (2.4) and flow through it over an adjustable dwell time as the flow speed increases along its flow path, wherein the shape of the flow cross-section before the mixing chamber (2.4) is retained basically according to step (a);
(g) the flow of the gaseous heat distributor (D) is increased in the manner of a diffuser in the area of the pressure drop at its site of introduction into the liquid product (P) in the direction of the flow speed of the liquid product (P);
(h) the flow of the gaseous heat distributor (D) is supplied evenly diffused to its site of introduction into the liquid product (P);
(i) the flow of the gaseous heat distributor (D) is supplied evenly distributed to the sites of introduction into the liquid product (P) to be supplied in parallel.

## Revendications

1. Injecteur pour introduire un agent caloporteur sous forme de vapeur dans un produit liquide, notamment un aliment ou une boisson, dans lequel l'agent caloporteur sous forme de vapeur (D) réchauffe le produit liquide (P) pour former un produit stérile et dans lequel l'écoulement de l'agent caloporteur sous forme de vapeur (D) est provoqué par la chute de pression, qui est générée par la vitesse du produit liquide (P), comprenant un carter d'injecteur (6) comportant une première admission (6.3) pour le produit liquide (P) et une seconde admission (6.4) pour l'agent caloporteur sous forme de vapeur (D), un premier compartiment d'admission (2) présentant un échappement (6.6) dans le carter d'injecteur (6), lequel compartiment d'admission est configuré en forme de buse côté entrée et est relié à la première admission (6.3), un compartiment de mélange annulaire (2.4), qui fait partie du premier compartiment d'admission (2) et est formé entre un corps de refoulement (5.1) symétrique en rotation coulissant dans la direction axiale d'une part et un carter (7) interne annulaire entourant ce dernier d'autre part, et un second compartiment d'admission (3) annulaire formé entre le carter interne (7) et le carter d'injecteur (6) entourant celui-ci, lequel compartiment d'admission est relié à la seconde admission (6.4), avec plus d'une buse annulaire (4.1, 4.2, 4.3, ...), qui, vu dans le sens d'écoulement du produit liquide (P), sont agencées à distance les unes derrière les autres, peuvent être alimentées par l'agent caloporteur sous forme de vapeur (D), sont configurées dans ou sur le carter interne (7) et sont reliées au second compartiment d'admission (3) et qui débouchent via une ouverture d'échappement en forme de fente annulaire (4.1a, 4.2a, 4.3a, ...) du côté du carter (7) interne enveloppant selon un angle d'inclinaison (α) dans le même sens que le sens d'écoulement du produit liquide (P) dans le compartiment de mélange (2.4),
**caractérisé en ce que**,
sur le carter interne (7), vu dans le sens d'écoulement du produit liquide (P), est configuré respectivement un ergot annulaire (7.1a, 7.2a, 7.3a, ...) immédiatement avant l'ouverture de sortie respective en forme de fente annulaire (4.1a, 4.2a, 4.3a,...), lequel ergot serre radialement côté extérieur à l'endroit respectif une section transversale de passage (A₁, A₂, A₃, ...) du compartiment de mélange (2.4 ; 2.4.1, 2.4.2, 2.4.3,...), de telle sorte que cette section transversale de passage (A₁, A₂, A₃, ...) est rétrécie, vu dans le sens d'écoulement du produit liquide (P), par rapport à une section transversale de passage respectivement prépositionnée à celle-ci.

2. Injecteur selon la revendication 1,
**caractérisé en ce que**,
l'angle d'inclinaison (α) est mesuré à l'encontre de la normale sur l'axe longitudinal du compartiment de mélange (2.4), et **en ce que** pour l'angle d'inclinaison (α) est prévue une valeur comprise dans la plage de 30 à 45 degrés, de préférence une valeur de 35 degrés.

3. Injecteur selon les revendications 1 ou 2,
**caractérisé en ce que**,
par rapport au sens d'écoulement du produit liquide (P), la surface de délimitation côté aval de l'ouverture de sortie respective en forme de fente annulaire (4.1a, 4.2a, 4.3a, ...) dépasse dans une partie oblique continue (7.2b, 7.3b, 7.4b, ...) sur le carter interne (7), la partie oblique respective (7.2b, 7.3b, 7.4b, ...) présentant une inclinaison supérieure, à l'encontre de l'axe longitudinal du compartiment de mélange (2.4), à celle de la surface de délimitation, rattachée en aval à la partie oblique respective, du carter interne (7).

4. Injecteur selon la revendication 3,
**caractérisé en ce que**,
la transition entre la surface de délimitation côté aval de l'ouverture de sortie respective en forme de fente annulaire (4.1a, 4.2a, 4.3a, ...) et la partie oblique continue respectivement associée à celle-ci (7.2b, 7.3b, 7.4b, ...) est exécutée arrondie.

5. Injecteur selon une des revendications 1 à 4,
**caractérisé en ce que**,
l'entrée respective de la buse annulaire (4.1, 4.2, 4.3, ...) est entourée par une bague de distribution (9) s'engageant radialement vers l'extérieur dans le carter interne (7), la périphérie de cette bague comprenant une pluralité d'alésages annulaires (9a) répartis à distance régulière les uns des autres, qui respectivement relient la buse annulaire (4.1, 4.2, 4.3, ...) au second compartiment d'admission (3).

6. Injecteur selon une des revendications 1 à 5,
**caractérisé en ce que**,
vu dans le sens d'écoulement de l'agent caloporteur sous forme de vapeur (D), et en amont de son entrée dans le second compartiment d'admission (3), dans une tubulure d'extension (6.5) conique raccordée à la seconde admission (6.4) est prévue une tôle de guidage (8) comprenant une pluralité d'alésages de distribution (8a) agencés en forme de tamis, laquelle tôle remplit presque entièrement la section transversale de passage de la tubulure d'extension (6.5).

7. Injecteur selon la revendication 6,
**caractérisé en ce que**,
la tôle de guidage (8) est pliée en V et l'arête pliée s'étend dans le plan du diamètre supérieur de la tubulure d'extension conique (6.5).

8. Injecteur selon une des revendications 1 à 7,
**caractérisé en ce que**,
la section transversale de passage du premier compartiment d'admission (2) se rétrécit en continu dans sa zone de projection traversée par le corps de refoulement (5.1) dans le sens d'écoulement du produit liquide (P).

9. Injecteur selon une des revendications 1 à 8,
**caractérisé en ce que**,
le carter interne (7) comprend des bagues de carter séparées (7.1, 7.2, 7.3, 7.4, ...) qui, vu dans le sens d'écoulement du produit liquide (P), sont alignées les unes contre les autres et sont séparées axialement les unes des autres par les bagues de distribution (9) dans la zone de la buse annulaire respective (4.1, 4.2, 4.3, ...), la surface de délimitation interne respective des bagues de carter (7.1, 7.2, 7.3, 7.4, ...) se présentant sous une forme tronconique.

10. Injecteur selon une des revendications 1 à 9,
**caractérisé en ce que**,
le corps de refoulement (5.1), vu dans le sens d'écoulement du produit liquide (P), se rétrécit derrière la première buse annulaire (4.1) et approximativement parallèlement à la surface de délimitation interne du carter interne (7).

11. Injecteur selon une des revendications 1 à 10,
**caractérisé en ce que**,
le corps de refoulement (5.1) est déplacé manuellement ou de façon motorisée.

12. Procédé pour introduire un agent caloporteur sous forme de vapeur dans un produit liquide, notamment un aliment ou une boisson, dans lequel l'agent caloporteur sous forme de vapeur (D) réchauffe le produit liquide (P) pour former un produit stérile et dans lequel l'écoulement de l'agent caloporteur sous forme de vapeur (D) est provoqué par la chute de pression, qui est générée par la vitesse du produit liquide (P), un injecteur étant utilisé selon une des revendications précédentes, et dans lequel
dans un premier étage du procédé sont réalisées les étapes suivantes connues en soi (a) à (d) :
(a) le courant du produit liquide (P) se présente sous la forme de jet moteur annulaire central et obtient, avant l'introduction dans un compartiment de mélange (2.4) avec volume ajustable, par rapport à un plan s'étendant à travers l'axe longitudinal du compartiment de mélange (2.4), une section transversale d'écoulement contrainte dont la projection dans la direction radiale est réduite par rapport à une seconde direction orthogonale ;
(b) la vitesse générant la chute de pression est produite dans le courant du produit liquide (P) avant l'entrée dans le compartiment de mélange (2.4) ;
(c) le courant de l'agent caloporteur sous forme de vapeur (D) est aspiré dans la zone de la chute de pression avec une composante d'écoulement qui, par rapport au plan s'étendant à travers l'axe longitudinal du compartiment de mélange (2.4) est orientée dans la direction radiale et entre en contact radialement côté extérieur avec le produit liquide (P) ;
(d) le courant de l'agent caloporteur sous forme de vapeur (D) reçoit dans la zone de chute de pression au niveau de son point d'introduction dans le produit liquide (P) une composante d'écoulement en direction de la vitesse d'écoulement du produit (P) ;
et dans lequel dans au moins un autre étage du procédé de manière connue en soi
(e) le mélange produit formé de produit liquide (P) et d'agent caloporteur sous forme de vapeur (D) demeure non-ramifié et parcourt en aval au moins une autre séquence (a) à (d),
**caractérisé**
**par** les autres étapes (f) à (i) suivantes à réaliser :
(f) le produit liquide (P) et l'agent caloporteur (D) se condensant sont mélangés dans le compartiment de mélange (2.4) et parcourent ce dernier avec un temps de séjour ajustable lorsque la vitesse d'écoulement augmente le long de sa voie d'écoulement, la forme de la section transversale d'écoulement étant essentiellement conservée selon l'étape (a) en amont du compartiment de mélange (2.4) ;
(g) le courant de l'agent caloporteur sous forme de vapeur (D) est réparti à la manière d'un diffuseur dans la zone de chute de pression au niveau de son point d'introduction dans le produit liquide (P) en direction de la vitesse d'écoulement du produit liquide (P) ;
(h) le courant de l'agent caloporteur sous forme de vapeur (D) est amené de façon uniformément répartie à son point d'introduction dans le produit liquide (P) ;
(i) le courant de l'agent caloporteur sous forme de vapeur (D) est amené de façon uniformément répartie, à ses points d'introduction devant être approvisionnés parallèlement, dans le produit liquide (P).
